# EUROPEAN PATENT APPLICATION

(11) **EP 0 952 098 A1**
(43) Date of publication of application: **27.10.1999**
(21) Application number: 99201254.2
(22) Date of filing: 20.04.1999
(51) Int. Cl.: B65G 41/02, E21D 9/12

(54) **Tunnel conveyor unit**

(30) Priority: 20.04.1998 NL 1008933
(71) Applicant: Barrages Services International BV, 4455 TZ Nieuwdorp (NL)
(72) Inventor: van der Kooy, Leendert Pieter Dirk, 2321 Meer (BE)
(74) Representative: Duxbury, Stephen

(57) **Abstract**

Conveyor unit, comprising:
- an endless belt which is at least partially U-shaped in cross-section;
- guide means for guiding the belt between an unloading end thereof and a loading end thereof;
- drive means for driving the belt between the unloading end and the loading end; and
- suspension means for suspending the belt from the guide means, wherein the endless belt comprises two sections, wherein the first section is driveable from the unloading end to the loading end, and the second section is driveable from the loading end to the unloading end and wherein one of the two sections is arrangeable above the other section.

## Description

The present invention relates to a conveyor unit, in particular a conveyor unit which is used in a tunnel, a conveyor system comprising this unit and a method for excavating material and subsequently transporting away this excavated material.

When tunnels such as for instance the Channel Tunnel or underground railway tunnels are made, enormous quantities of excavated material have to be transported away from the tunnel face back through the relatively small tunnel shaft to be deposited. At present this is done by means of trucks which are driven to the end of the tunnel shaft for loading of the excavated material at that location and are then driven back through the tunnel in order to unload this material somewhere outside the tunnel. Since in the case of this type of tunnel many different types of work operations are carried out simultaneously such as the arranging of concrete tunnel walk, laying a concrete floor and providing a ceiling in the limited working space, discharge of the excavated material in this manner causes many problems and can be dangerous for the tunnel workers.

The dumper trucks used for transporting the excavated material are referred to as wheelloaders. A major problem with wheelloaders is to obtain continuity in the removal of material, which is continually excavated by the tunneling tool.

An associated problem, as referred to above, is to remove this material considering the limited free space available in the tunnel shaft.

As the tunnel increases in length, the time required for the wheelloaders to travel between the tunnel face and the deposition side increases whereby the capacity of the wheelloaders, in the removal of excavated material m³/h decreases rapidly. As the tunneling progresses, more and more wheelloaders are needed in order to keep up with the capacity of the tunnel drilling machine. An associated problem is the removal of exhaust fumes omitted from the wheelloaders out of the tunnel.

An object of the present invention is to provide a conveyor which obviates one or more of these problems.

According to a first aspect of the present invention a conveyor unit is provided which comprises:
- an endless belt which is at least partially U-shaped in cross-section;
- guide means for guiding the belt between an unloading end thereof and a loading end thereof;
- drive means for driving the belt between the unloading end and the loading end;
- transmission means for transmitting the drive energy of the drive means to the endless belt; and
- suspension means for suspending the belt from the guide means, wherein the endless belt comprises two sections, wherein the first section is driveable from the unloading end to the loading end, and the second section is driveable from the loading end to the unloading end, wherein one of the two sections is arrangeable above the other section.

This conveyor unit enables continuous removal of excavated material from the tunnel face obviating the need for wheelloaders and their associated drawbacks. Furthermore the system provides a major saving in working space in a tunnel.

The unloading end of the conveyor unit is preferably disconnectable so that a new conveyor unit according to the present invention can be fixed to the conveyor already present in a tunnel, whereafter the unloading end can once again be fixed to this new unit Accordingly as the length of the tunnel increases due to excavation of material, the length of the conveyor can be increased in a corresponding manner so that material is always offloaded outside the tunnel.

The conveyor unit according to the present invention is further defined characterized by the appended claims 2-10.

According to a second aspect of the present invention there is provided a system for tunnel excavation comprising an excavating machine and one or more connected conveyor units as according to any of the claims 1-10, which are coupled to the excavating machine.

According to a third and fourth aspect of the present invention a method is provided for transporting material between a loading station and an unloading station by making use of the conveyor according to the present invention and a method for excavating material and for transporting away this excavated material by making use of the system according to the present invention.

Further features, advantages and details of the present invention will become apparent in the light of the following description with reference to the annexed figures, in which:
figure 1 shows a partially broken-away perspective view of an embodiment of the system according to the present invention;
figure 2 shows a front view of a part of the conveyor unit according to the present invention;
figure 3 shows a front view of another embodiment of a part of the conveyor unit according to the present invention;
figure 4 is a perspective view of a determined length of the conveyor unit according to the present invention which is connectable to a conveyor according to the present invention already existing in a tunnel;
figure 5 is a perspective view of a tunnel section according to the present invention;
figures 6 and 7 are perspective views of two different embodiments of the endless belts of the conveyor unit; and
figures 8a-c show views of a bay section for adding new lengths to the existing conveyor.

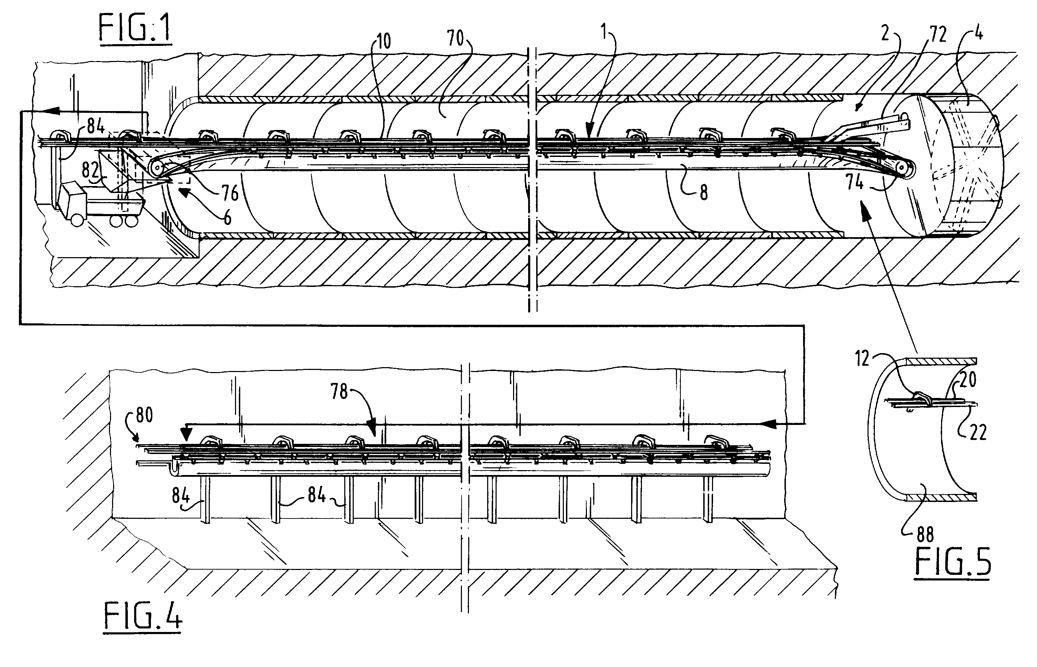

A conveyor unit 1 (figure 1) has a loading end 2, which is coupled to a tunnel excavating machine 4, and an unloading end 6. The conveyor unit has an endless belt 8 which is suspended from rails 10 which are in turn fixed to arms 12.

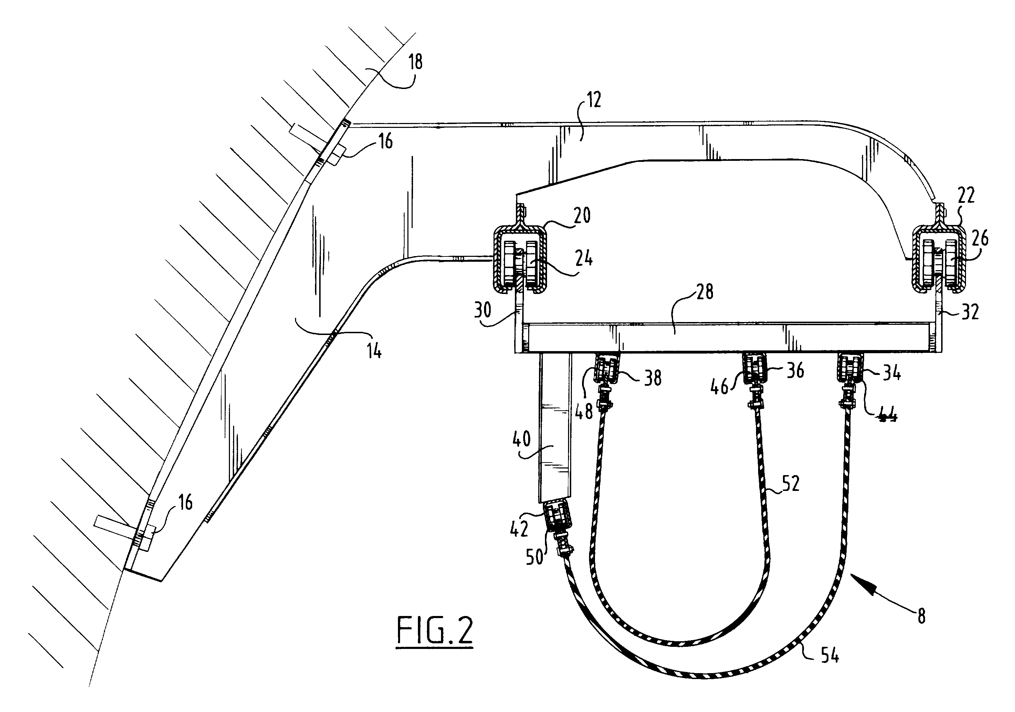

The arms 12 have a somewhat curved shape (figure 2), wherein a side surface 14 is fixed by means of bolts and nuts 16 to a tunnel wall 18 in order to provide a lightweight, resilient support, which is preferably made of aluminum.

Two rails 20, 22 are mounted opposite one another on support arm 12.

Runner wheels 24, 26 run in these rails 20 respectively 22.

A displaceable support beam 28 extends between suspended runners 24 respectively 26 and mounting parts 30 respectively 32.

Three rail sections 34, 36 and 38 are fixed directly onto this support beam 28. Also fixed to this support beam 28 is a suspended column support 40 under which is arranged a fourth rail section 42.

Runner wheels 44, 46, 48 and 50 run in these rails 34,36,38,42.

An inner first length 52 of the belt 8 having a narrow U-shaped cross-section hangs downward from wheels 46, 48.

An outer second length 54 of the belt 8 with a wide U-shaped cross-section is suspended from wheels 44, 50 to enclose the first length 52.

Drive motors and transmission means (not shown) are also mounted on the support beam 28 for driving belt lengths sections 52 and/or 54 between the loading end 2 and the unloading end 6 and vice versa. Suitable drive and transmission means are described in the Netherlands patent application no. 9400819 of the Applicant.

The belt 8 can be fixed to the wheels by the same means which are described in the above stated Netherlands patent application.

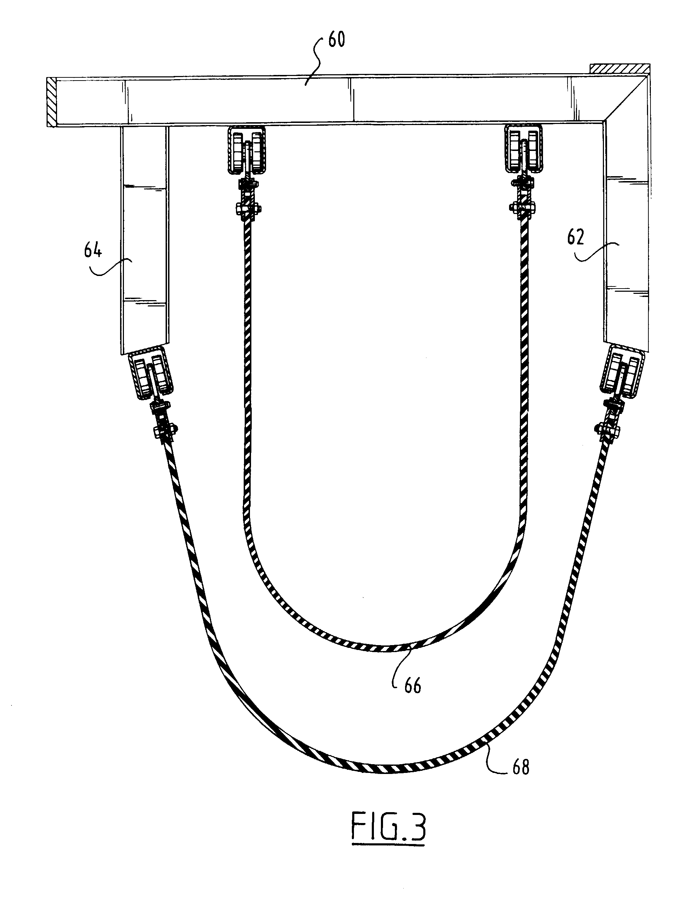

In another embodiment of the present invention (figure 3) a support beam 60 has in cross-section a downward hanging L-section 62 which is mounted opposite a downward hanging column support 64 on beam 60. In this embodiment both the outer section 68 and the inner section 66 of the belt are substantially symmetrical.

During use a tunnel 70 (figure 1) is excavated by means of a tunnel excavating machine 4. This excavating machine 4 is coupled to the runners 24 respectively 26 running in rails 20 respectively 22. As the tunnel excavating machine 4 moves forward the runners 24, 26 are pulled along, thereby in turn pulling the beams 28 deeper into the tunnel, whereby the belt 8 itself is also displaced deeper into tunnel 70.

A chute 72 is fixed to the tunnel excavating machine 4 whereby excavated material is poured into the inner section 52, 66 of the belt 8. Since this inner section 52, 66 has to carry heavy excavated material between the loading end 2 and the unloading end 6, this section most preferably has a symmetrical U-shape in cross-section.

Since the empty sections 54, 68 of conveyor belt 8, which are driven between unloading end 6 and loading end 2, does not have to carry any material it is fixed around the inner section in a manner such that it takes up very little space (figures 2 and 3).

At loading end 2 and unloading end 6 the belt is reversed by means of reversing rollers 74, 76, as also described in the Netherlands patent application no. 9400819 of Applicant.

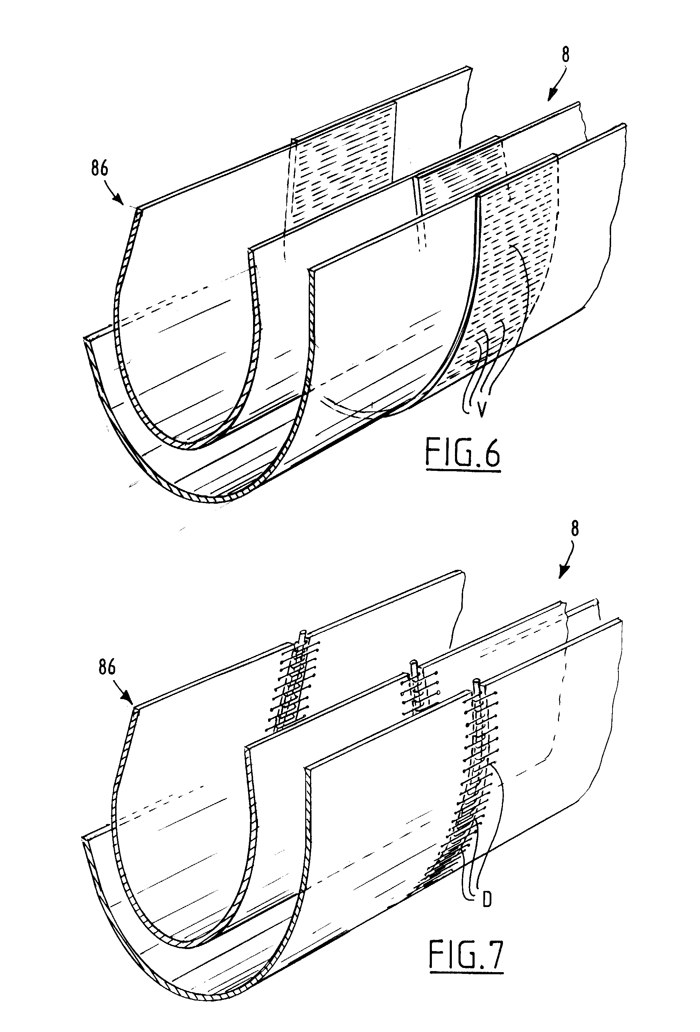

The unloading end, including the reversing roller 76, can be disconnected in a manner not shown so that another unit 78 (figure 4) can be fixed to the unit 1 already in the tunnel, whereafter the unloading end 6 can be relocked onto an outer end 80 of this second unit 78 so that, as the tunnel becomes longer, excavated material can always be transported away and offloaded into a chute 82 situated outside the tunnel. Excavation is usually stopped during coupling of a new conveyor unit.

In the case of the conveyor units situated outside the tunnel, the rails 20, 22 are mounted on standing support arms 84.

In practice, the unloading end is disconnected whereafter the belt is lengthened by firstly severing the belt associated with the unloading end from the belt running through the tunnel, whereafter a new length of belt can be joined there between.

This new length of belt 86 (figures 6 and 7) can be fixed to the existing belt length 8 by means of vulcanizing "V" (figure 6) or by means of heavy duty stitching threads "D" (figure 7) .

Immediately rear to the excavating machine 4 pre fabricated tunnel sections 88 with the support arms and rails mounted thereon, are arranged in place the tunnel (figure 5 and figure 1) in order to support the loading end as the excavating machine moves forward, and accordingly ensure that a continuous removal of excavated material is provided.

In a preferred embodiment of the present invention the support arms are arranged on the tunnel walls at four metre spacing in order to provide a good stability. Since almost all pressure of the loaded section of the belt is exerted in a vertical direction, heavy reinforcements of the support arms can be avoided.

By means of a winch system (not shown) the conveyor belt can also be displaced over inclines and around bends without control being lost.

The conveyor units have for instance a length of 400 metres, so only after a tunnel of 400 metres has been excavated is a new unit coupled thereto.

Using this conveyor unit about 500 to 600 m³ of material can be transported away per hour.

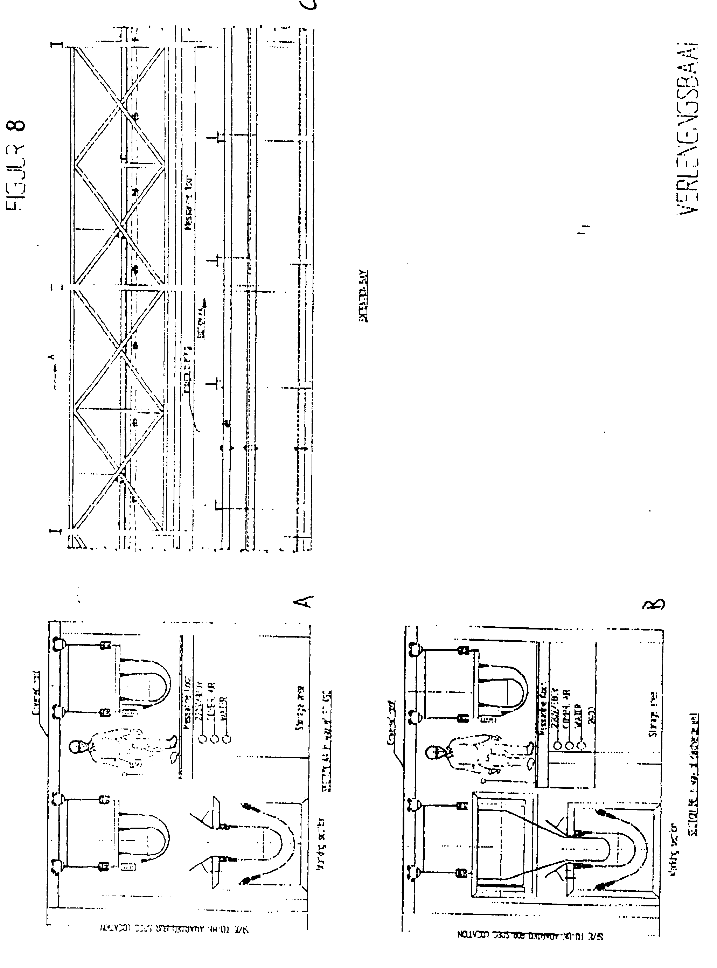

In a preferred embodiment of the current invention, a conveyor lengthening bay (figure 8c) is arranged just outside the tunnel opening. This lengthening bay enables further sections of the conveyor having a relatively large length, for example up to 150 metres, to be built up and prepared for coupling to the existing conveyor unit in such a way that the coupling of the new section, can be quickly and efficiently carried out in order to ensure a minimum stoppage time of tunnel excavation.

The lengthening bay comprises an extended work place built up of steel frame elements provided with a work floor for building up the sections to the desired length. The length of the lengthening bay should be somewhat greater than the length of the sections to be made. These sections are possibly, as stated above, very long in order to reduce the number of sections, and accordingly number of stoppages, during the tunnel excavation. In order to ensure a fast coupling of the new section to the existing conveyor, the secondary rails 20, 22 extend from the tunnel into the lengthening bay (see figure 1).

A section to be made is suspended in a transverse guiding system, consisting of transverse rails and trolleys extending over the whole length of the lengthening bay (see figures 8a and 8b).

The transverse rails are placed at such a distance that the conveyor is sufficiently supported against tearing and bending.

Suspension of the section to be made within the trolleys of the transverse guiding system can take place simultaneously with the production of the section to be made. After the section to be made is transversely displaced to the rear of the existing conveyor, the coupling can be effected.

In order to further reduce the coupling time, the section to be made can be pre-provided with an unloading end, whereby after coupling of the rails and belt sections, excavation can be resumed immediately.

The unloading end of the conveyor which had been previously removed, is then re-usable for a new conveyor section to be build.

The deposition of excavated material from the unloading end, which is slowly pulled into the tunnel by the tunnel drilling machine, whereby the unloading end is pulled through the lengthening bay to the front end thereof, can take place on a second transport belt, which runs parallel underneath the transport belt in the lengthening bay and is so constructed that this can be loaded over its entire length (see figures 8a and 8b).

The present invention is not limited to the above description, the rights sought being defined by the following claims.

## Claims

1. Conveyor unit, comprising:
- an endless belt which is at least partially U-shaped in cross-section;
- guide means for guiding the belt between an unloading end thereof and a loading end thereof;
- drive means for driving the belt between the unloading end and the loading end; and
- suspension means for suspending the belt from the guide means, wherein the endless belt comprises two sections, wherein the first section is driveable from the unloading end to the loading end, and the second section is driveable from the loading end to the unloading end and wherein one of the two sections is arrangeable above the other section.

2. Conveyor unit as claimed in claim 1, wherein the suspension means are arranged on displaceable support means.

3. Conveyor unit as claimed in claim 1 or 2, wherein the guide means comprise wheels, which wheels run in the suspension means which comprise primary rails.

4. Conveyor unit as claimed in claim 2 or 3, wherein the displaceable support means depend from moving means, which moving means preferably comprise wheels.

5. Conveyor unit as claimed in claim 4, wherein the moving means are suspended in secondary rails.

6. Conveyor unit as claimed in claim 5, wherein the rails are mounted on one or more support arms, which support arm has a form such that it is fixable to a tunnel wall.

7. Conveyor unit as claimed in any of the preceding claims, further comprising one or more freestanding supports on which the secondary rails are arranged.

8. Conveyor unit as claimed in any of the foregoing claims, further comprising coupling means for coupling to an excavating machine.

9. Conveyor as claimed in any of the foregoing claims, further comprising belt-regulating means for regulating the displacement of the belt over inclines.

10. Conveyor as claimed in any of the claims 1-9, wherein the unloading end is disconnectable.

11. System for excavating, comprising an excavating machine and one or more connected conveyor units as claimed in any of the claims 1-10 coupled to the excavating machine.

12. Method for transporting material between a loading station and an unloading station utilizing a conveyor as claimed in claims 1-10.

13. Method for excavating material and for transporting away this excavated material by utilizing a system as claimed in claim 11.

14. Device for holding in place a conveyor unit as claimed in claim 1, comprising:
- support means with a form such that they can be fixed to a tunnel wall.

15. Assembly comprising a device as claimed in claim 14 and a predetermined length of rails arranged on the support means.

16. Tunnel section comprising the conveyor unit as claimed in claims 1-10, and/or the system as claimed in claim 11, and/or the device as claimed in claim 14, and/or the assembly as claimed in claim 15.

17. Tunnel comprising one or more sections as claimed in claim 16.

18. Transport systems comprising a conveyor unit according to any of the claims 1-10, for removing excavated material during a tunnel drilling process, based on a conveyor belt system consisting of a single transport belt or a plurality of transport belts, which are placed one after the other and unload into each other, characterized in that the complete transport belt system is displaceable in the longitude north direction of the tunnel, is suspended from supports mounted on the tunnel wall, floor or ceiling, wherein a trolley rail system is associated therewith and coupled to a tunnel drilling machine, either directly by a mechanical coupling or indirectly by non-mechanical means, whereby the transport belt system is displaceable into the tunnel by means of being pulled at a certain distance by the tunnel drilling machine whereby a continuous excavation and removal of material is effected.

19. Transport system for removing excavated material by a tunnel drilling process according to claim 1 characterized in that the suspended transport belt system displaceable in the longitude north direction, consists of a single modular extendable transport belt system, build up from the following components, modular rail sections consisting of four parallel rails wherein or where along trolleys in the longitude north direction are displaceable and wherein the transport belt is suspended which modular rail sections are mutually coupleable in order to provide a transport belt system having a desired length, a loading section forming the first section of the transport belt system provided with belt reversing means, an unloading section forming the last section of the transport belt system provided with belt reversing means, drive units placed on the rails for driving the belts there along, an endless belt suspended from the trolleys which is driveable between the unloading and loading sections.

20. Transport system according to claim 10 characterized in that for extending the conveyor unit, a lengthening bay is provided.
